# EUROPEAN PATENT SPECIFICATION

(11) **EP 4 127 448 B1**
(45) Date of publication and mention of the grant of the patent: **20.05.2026**
(21) Application number: 21718972.9
(22) Date of filing: 26.03.2021
(51) Int. Cl.: F02N 11/08, F02N 11/10, F02D 41/26

(54) **AN ENGINE MANAGEMENT SYSTEM FOR A VEHICLE**
MOTORVERWALTUNGSSYSTEM FÜR EIN FAHRZEUG
SYSTÈME DE GESTION DE MOTEUR POUR UN VÉHICULE

(30) Priority: 31.03.2020 IN 202041014488
(43) Date of publication of application: 08.02.2023
(73) Proprietor: TVS Motor Company Limited, Chennai 600 006, Tamil Nadu (IN)
(72) Inventor: RAJASEKAR, Sabariram, Chennai 600 006, Tamil Nadu (IN); PRAKASAM SURESH, Thatavarthi, Chennai 600 006, Tamil Nadu (IN); RAJARAM SAGARE, Datta, Chennai 600 006, Tamil Nadu (IN)
(74) Representative: Patentanwaltskanzlei Matschnig & Forsthuber OG
(86) International application number: PCT/IN2021/050317
(87) International publication number: WO 2021/199074

(56) References cited:
- EP-A1- 2 716 896
- EP-A2- 1 992 815
- US-A1- 2008 252 041
- US-A1- 2017 211 494

## Description

### FIELD OF THE INVENTION

The present invention relates to a two-wheel vehicle and an engine management system.

### BACKGROUND OF THE INVENTION

Typically, an Electronic Fuel Injection (EFI) system is coupled with an Electric control Unit (ECU) and uses various sensors to control an internal combustion engine and meet emission, fuel economy and drive ability requirements of a vehicle. Further, to reduce excess fuel consumption, an Integrated Starter Generator (ISG) is also incorporated in vehicles. The ISG cranks the engine and generates power. In some cases, the ISG is also provided with automatic idle start-stop functionality. Accordingly, when the vehicle momentarily halts, the ISG senses the same and shuts off the engine to save consumption of the fuel. Once the user actuates throttle of the vehicle, the ISG starts the engine immediately thus reducing the fuel consumption. As such, the ISG is also coupled with the ECU which controls the operation of the ISG.

Presently, vehicles are incorporated with both the EFI and ISG systems. As such, vehicles have a common ECU which controls the EFI as well as the ISG. Further, there are plenty of vehicles having only EFI systems which require retrofitting of an ISG system. In such vehicles, when the ISG system is retrofitted, the ECU of the EFI is replaced with a common controller that controls both the EFI and the ISG.

However, having a single ECU for both the EFI and the ISG has several problems, one of which is that the single ECUs are bulky and difficult to mount on the vehicle since they occupy a substantial amount of space. Moreover, typically a controller for an ISG generate a lot of heat and therefore functionality of such controller when combined with functionality of a controller for EFI in a common controller, the common controller generates a lot of heat and thus requires adequate cooling. However, common controller does not have requisite means to effectively dissipate the heat. Even if additional heat sinks are deployed for dissipation of heat, such heat sinks will make the entire packaging bulkier and will occupy substantial amount of space on the vehicle. Further, if either of the EFI system or the ISG system requires a repair or replacement, the common ECU also must be replaced or serviced. This adds to replacement and labour costs. Also, calibration of the single ECU takes a substantial amount of time during every servicing or replacement. Furthermore, vehicles having an ISG and vehicles not having ISG will require controller with different versions of software required for functioning of the controller.

Hence, there is a need in the art for a system which addresses at least the aforementioned problems. US2017/211494A1 shows an engine management system of prior art, and US2008/252041A1 shows a two-wheel vehicle of prior art.

### SUMMARY OF THE INVENTION

The present invention is directed to a two-wheel vehicle according to claim 1.

In an embodiment of the invention, the first set of sensors comprises at least one of crank position sensor, a throttle position sensor, an engine temperature sensor and a vehicle speed sensor. In this regard, the first controller is further configured to communicate the inputs received from the crank position sensor, the throttle position sensor, the engine temperature sensor and the vehicle speed sensor to the second controller, the second controller further configured to: compare the inputs with predetermined conditions and generate comparing result for each of the inputs; and output an idle stop signal to the ISG and an ignition disable signal to the first controller based on the comparing results.

According to the invention, the first set of sensors comprises at least one of roll over sensor to measure angular position of the vehicle, and a side stand sensor to detect status of a side stand of the vehicle. In this regard, the first controller is further configured to output an ignition disable signal to the ignition system and an injection disable signal to the fuel injection system in case the vehicle is in a rollover state of and/ or in case the side stand is in a deployed state.

According to the invention, the first controller is further configured to communicate the inputs received from the roll over sensor and the side stand sensor to the second controller, the second controller further configured to: output a cranking disable signal to the ISG in case the vehicle is in a rollover state of and/ or in case the side stand is in a deployed state.

In a further embodiment of the invention, the first controller is configured to receive inputs from a first set of switches, the first set of switches comprises at least one of ignition key and a kill switch; and outputs an ignition disable signal to the ignition system and an injection disable signal to the fuel injection system in case the ignition key is switched OFF and/ or in case the kill switch is switched ON.

In another embodiment of the invention, the first controller is further configured to communicate the inputs received from the ignition key and the kill switch to the second controller. The second controller is further configured to output a cranking disable signal to the ISG in case the ignition key is switched OFF and/ or in case the kill switch is switched ON.

In yet another embodiment of the invention, the first controller is further configured to monitor status of each of the first set of sensors; and output a signal indicating failure of any of the first set of sensors to the second controller.

In a further embodiment of the invention, the first set of actuators comprises an injector and a fuel pump of the fuel injection system, and an ignition coil of the ignition system.

In an embodiment of the invention, the second set of switches comprises at least one of electric start switch, a brake switch, an ignition key and an idle start-stop switch.

In yet another embodiment of the invention, the second controller is further configured to receive inputs from a second set of sensors. The second set of sensors has at least one of speed sensor to detect speed of a rotor of the ISG and a position sensor to detect position of the rotor of the ISG; and output a control signal to the ISG thereby dynamically controlling the operation of the ISG.

In another embodiment of the invention, the first controller and the second controller communicate with each other through the control bus using a CAN protocol or a K-line protocol.

In yet another embodiment of the invention, the second controller is an Electronic Control Unit (ECU) of a hybrid vehicle and configured to: communicate with the first controller.

In another embodiment of the invention, the first controller is further configured to communicate with an instrument cluster of the vehicle.

In an further embodiment of the invention, the first controller is further configured to communicate with a telematics unit of the vehicle or an Inertial Measurement Unit (IMU) of the vehicle or a Bay Control Unit of the vehicle or a Hydraulic and Electronic Control Unit of the vehicle.

### BRIEF DESCRIPTION OF THE DRAWINGS

Reference will be made to embodiments of the invention, examples of which may be illustrated in accompanying figures. These figures are intended to be illustrative, not limiting. Although the invention is generally described in context of these embodiments, it should be understood that it is not intended to limit the scope of the invention to these particular embodiments.
Figure 1 shows a right-side perspective view of a vehicle having an engine management system in accordance with an embodiment of the invention.
Figure 2 shows a block diagram of an engine management system in accordance with an embodiment of the invention.
Figure 3 shows exploded view of the vehicle having an engine management system in accordance with an embodiment of the invention.

### DETAILED DESCRIPTION OF THE INVENTION

The present invention discloses an engine management system for a two-wheeled vehicle.

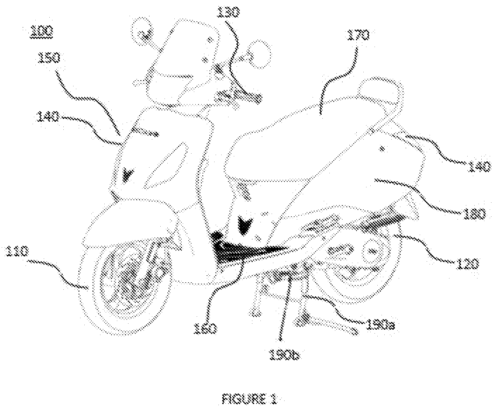

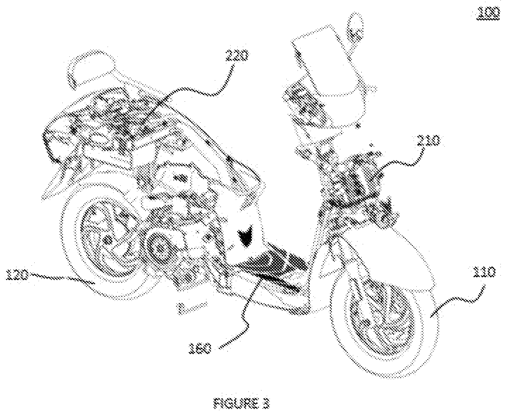

Figure 1 shows a right-side perspective view of a saddle type vehicle 100. The vehicle 100 extends between a front wheel 110 and a rear wheel 120. The vehicle has a maneuvering handle 130 coupled to its front wheel 110. Between the handle 130 and front wheel 110, there is a front cover 140 and a rear cover 150. Front cover 140 and the rear cover 150 abut on each other to form a housing for various components of the vehicle 100. The vehicle 100 has a floorboard 160 which acts as a footrest for a rider sitting on a seat 170. Further, the vehicle has a left-side cover 180 and a right-side cover (not shown). As shown in Figure 3, between the left-side cover 180 and the right-side cover, various components such as Internal Combustion (IC) engine, transmission system, Integrated Starter Generator (ISG), fuel injection system, ignition system, etc., of the vehicle 100 are housed. Further the vehicle 100 has a center stand 190a and a side stand190b.

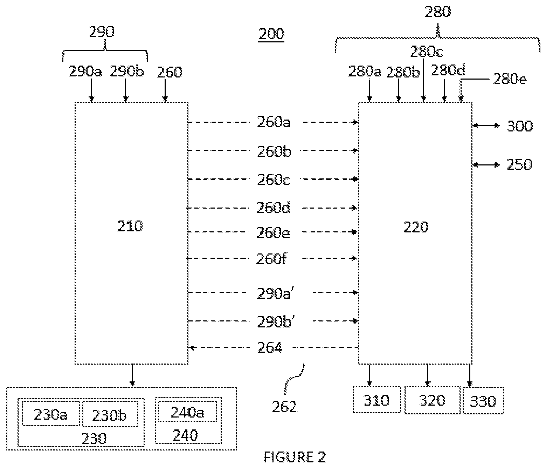

Figure 2 shows a block diagram of an engine management system 200 of the present invention. As shown, the engine management system 200 has a first controller 210 and a second controller 220. The first controller 210 is operatively coupled to a fuel injection system 230 and an ignition system 240 of an IC engine of the vehicle 100. The second controller 200, on the other hand is operatively coupled to an Integrated Starter Generator (ISG) 250. The first controller 210 and the second controller 220 are interconnected by a control bus 262.

The fuel injection system 230 delivers fuel to the IC engine, while precisely controlling the injection timing, fuel atomization, and other parameters. In this regard, the fuel injection system 230 includes a battery, a fuel pump 230a and an injector 230b. The ignition system 240 generates a spark or heats an electrode to a high temperature to ignite a fuel-air mixture in the IC engine. In this regard, the ignition system 240 includes a battery, ignition coil 240a and a spark plug. The ISG 250 acts as a bi-directional power converter, changing mechanical energy into electrical energy and vice versa. Functioning as an electric motor, it starts the IC almost soundlessly and considerably faster than any conventional starter. As a generator, it produces power for the lights, the battery, etc.

Referring now to Figure 2, for the purpose of controlling the operations of the fuel injector system 230 and the ignition system 240, the first controller 210 receives inputs from a first set of sensors 260 mounted on the vehicle 100. In this regard, the first controller 210 is configured to compare the inputs received from the first set of sensors 260 with predetermined conditions and generate comparing result for each of the inputs, and output control signals to the fuel injection system 230 and the ignition system 240 based on the comparing results. Thus, the fuel pump 230a and the injector 230b of the fuel injection system 230 are controlled by control signals received from the first controller 210. Similarly, the ignition coil 240a of the ignition system 240 is controlled by control signal received from the first controller 210. The fuel pump 230a, the injector 230b and the ignition coil 240a constitute first set of actuators 242 controlled by control signal from the first controller 210.

For the purpose of controlling the operations of the ISG 250, the second controller receives inputs from the first controller 210 and from a second set of switches 280 mounted on the vehicle 100. The second controller 220 is remotely located from the first controller 210 and interconnected with the first controller through the control bus 260. In an embodiment of the present invention, communication between the first controller 210 and the second controller 220 is through CAN protocol or through k-line protocol. As shown in Figure 3, in an embodiment of the invention, the first controller 210 is located between the front cover 140 and the rear cover 150 whereas the second controller 220 is located between the left-side cover 180 and the right-side cover. Further, the second controller 220 is configured to compare the inputs received from the first controller and the second set of switches 280 with predetermined conditions and generate comparing result for each of the inputs, and output control signal to the ISG 250 based on the comparing results. Thus, the control signal from the second controller 220 controls the operation of the ISG 250 thereby controlling the cranking of the IC engine and idle start-stop of the vehicle.

In an embodiment of the invention, the first set of sensors 230 includes a crank position sensor to determine engine RPM, a throttle position sensor to detect position of a throttle/ accelerator of the vehicle 100, an engine temperature sensor to detect temperature of the IC engine and a vehicle speed sensor to determine speed of the vehicle. The first controller thus receives inputs from the crank position sensor, the throttle position sensor, the engine temperature sensor and the vehicle speed sensor; compares the inputs with predetermined conditions and outputs a corresponding control signal to the first set of actuators. In another embodiment of the invention, the first controller is further configured to communicate the inputs received from the crank position sensor 260a, the throttle position sensor 260b, the engine temperature sensor 260c and the vehicle speed sensor 260d to the second controller 220. In this regard, the second controller 220 is further configured to: compare the inputs with predetermined conditions and generate comparing result for each of the inputs 260a, 260b, 260c, 260d; and output a corresponding control signal to the ISG. In another embodiment of the invention, in case the inputs 260a, 260b, 260c, 260d received from the first controller 210 indicate to stop the vehicle, the controller 220 outputs an idle stop signal to the ISG 250 and an ignition disable signal to the first controller 210 based on the comparing results. Thus, the first controller 210 inhibits the operation of the fuel pump 230a, the injector 230b and the ignition coil 240a.

In another embodiment of the invention, the first set of sensors 260 includes safety critical sensors such as a roll over sensor to measure angular position of the vehicle 100 and a side stand sensor to detect status of a side stand 190 of the vehicle 100. In this regard, the first controller 210 is further configured to: output an ignition disable signal to the ignition system 240 and an injection disable signal to the fuel injection system 230 in case the vehicle is in a rollover state and/ or in case the side stand 190b is in a deployed state. In a further embodiment of the invention, the first controller 210 is configured to: communicate the inputs received from the roll over sensor 260e and the side stand sensor 260f to the second controller 220 wherein the second controller 220 is configured to: output a cranking disable signal to the ISG 250 in case the vehicle 100 is in a rollover state and/ or in case the side stand 190 is in a deployed state.

In an embodiment of the invention, the first set of sensors 260 also includes a manifold pressure sensor to determine pressure inside a manifold, an oxygen sensor to determine concentration of oxygen. Based on these inputs, the first controller 210 controls the operation of the fuel injector system 230 and the ignition system 240.

In an embodiment of the invention, the vehicle 100 has a first set of switches 290, such as an ignition key 290a and a kill switch 290b. In this regard, the first controller 210 is configured to receive inputs from the first set of switches 290 and output an ignition disable signal to the ignition system and an injection disable signal to the fuel injection system in case the ignition key is switched OFF and/ or in case the kill switch is switched ON. The first controller 210 is also configured to communicate the inputs 290a', 290b' received from the ignition key and the kill switch to the second controller 220 whereby the second controller 220 outputs a cranking disable signal to the ISG in case the ignition key is switched OFF and/ or in case the kill switch is switched ON. A cranking disable signal from the second controller 220 restrains the ISG from cranking the IC engine.

Further, the first controller 210 is also configured to monitor status of each of the first set of sensors 260. Upon having monitored, the first controller 210 is configured to output a signal 264 indicating failure of any of the first set of sensors 260 to the second controller 220. Indication of sensor failure to the second controller 220 helps the second controller 220 to control the operation of the ISG 250 independent of inputs received from the first set of sensors 260.

As described hereinbefore, for the purpose of controlling the operations of the ISG 250, the second controller 220 receives inputs from a second set of switches 280 mounted on the vehicle 100. The second set of switches 280 includes an electric start switch 280a to activate electrical systems for the vehicle 100, a brake switch 280b to detect application of brake, an ignition key 280c to activate ignition of the vehicle 100, a headlamp switch 280d to activate the headlamp, and an idle start-stop switch 280e. The second controller 220 is also connected to a battery 300 to monitor the state of charge of the battery 300. Based on the inputs received from the second set of switches 280, the second controller 220 controls the operation of the ISG 250.

Furthermore, the second controller 220 is also configured to receive inputs from a second set of sensors (not shown) and output a control signal to the ISG thereby dynamically controlling the operation of the ISG 250. In this regard, the second set of sensors are, including but not limited to, at least one of speed sensor to detect speed of a rotor of the ISG and a position sensor to detect position of the rotor of the ISG.

While the present invention has been described with a second controller (220) operatively coupled to the ISG 250, it may be noted that present invention may also extend to hybrid vehicles wherein the second controller is an Electronic Control Unit (ECU) of a hybrid vehicle and configured to communicate with the first controller.

Also, the first controller 210 may be further configured to communicate with an instrument cluster of the vehicle 100. In another embodiment of the invention, the first controller 210 may be further configured to communicate with a telematics unit of the vehicle 100 or an Inertial Measurement Unit (IMU) of the vehicle 100 or a Bay Control Unit of the vehicle 100 or a Hydraulic and Electronic Control Unit of the vehicle 100.

Advantageously, the need for having a common bulky controller for controlling the operations of a fuel injector system, an ignition system and ISG is obviated by the present invention. As such, packaging and mounting of individual controllers according to present invention on the vehicle becomes feasible and easier. Further, failure of one of the controllers of the present invention require replacement of that controller and not that of the entire system. Accordingly, if either of the EFI system or the ISG system requires a repair of replacement, the same can be done independently without disturbing the others' settings. Moreover, since number of pins on each of the controllers of the present invention is less, any hardware changes is feasible and easily achievable. Consequently, assembly time, mounting time and serviceability time of the controllers of the present invention will be reduced. Furthermore, where vehicles are to be retrofitted with an ISG unit in a vehicle having an EFI system, the same can be done without replacing the controller.

Further, the second controller 220 is connected to a headlamp unit 310, an idle start-stop indicator 320 which indicates start/ stop status of the vehicle and ISG malfunction indicator 330 which indicates failure or malfunctioning of the ISG 250.

## Claims

1. A two-wheel vehicle (100) comprising an engine management system (200) , the engine management system (200) comprising:
a first controller (210), the first controller (210) being operatively coupled to a fuel injection system (230) and an ignition system (240) of an internal combustion engine;
a second controller (220), the second controller (220) being operatively coupled to an Integrated Starter Generator (ISG) (250); and
a control bus (262), the control bus (262) being capable of interconnecting the first controller (210) and the second controller (220);
wherein, a first set of sensors (260) comprises at least one of roll over sensor (260e) to measure angular position of the two wheel vehicle (100), and a side stand sensor (260f) to detect status of a side stand (190) of the two wheel vehicle (100);
wherein the first controller (210) being further configured to: output an ignition disable signal to the ignition system (240) and an injection disable signal to the fuel injection system (230) in case the vehicle (100) is in a rollover state of and/or in case the side stand (190) is in a deployed state;
wherein the first controller (210) being further configured to: communicate inputs received from the roll over sensor (260e) and the side stand sensor (260f) to the second controller (220), the second controller (220) further being configured to: output a cranking disable signal to the ISG (250) in case the vehicle (100) is in a rollover state of and/or in case the side stand (190) is in a deployed state; and
the second controller (220) being remotely located from the first controller (210).

2. The two-wheel vehicle (100)as claimed in claim 1, wherein the first controller (210) being configured to: receive inputs from the first set of sensors (260) mounted on the vehicle (100); compare the inputs with predetermined conditions and generate comparing result for each of the inputs; and output control signals to a first set of actuators (242) of the fuel injection system (240) based on the comparing result.

3. The two-wheel vehicle (100) as claimed in claim 1, wherein the second controller (220) being configured to: receive inputs from the first controller (210) and from a second set of switches (280) mounted on the vehicle (100); compare the inputs with predetermined conditions and generate comparing result for each of the inputs; and output control signal to the ISG (250) based on the comparing result.

4. The two-wheel vehicle (100) as claimed in claim 1, wherein the first set of sensors (260) comprises at least one of a crank position sensor (260a), a throttle position sensor (260b), an engine temperature sensor (260c), and a vehicle speed sensor (260d).

5. The two-wheel vehicle (100)as claimed in claim 4, wherein the first controller (210) being further configured to: communicate the inputs received from the first set of sensors (260) to the second controller (220), the second controller (220) further configured to: compare the inputs with predetermined conditions and generate comparing result for each of the inputs from the sensors (260a, 260b, 260c, 260d) of the first set of sensors (260); and output an idle stop signal to the ISG (250) and the ignition disable signal to the first controller (210) based on the comparing result.

6. The two-wheel vehicle (100)as claimed in claim 1, wherein the first controller (210) being further configured to: receive inputs from a first set of switches (290), the first set of switches (290) comprises at least one of ignition key (290a) and a kill switch (290b); and outputs an ignition disable signal to the ignition system (240) and an injection disable signal to the fuel injection system (240) in case the ignition key (290a) is switched OFF and/ or in case the kill switch (290b) is switched ON.

7. The two-wheel vehicle (100) as claimed in claim 6, wherein the first controller (210) being further configured to: communicate inputs (290a', 290b') received from the ignition key (290a) and the kill switch (290b) to the second controller (220), the second controller (220) further configured to: output a cranking disable signal to the ISG (250) in case the ignition key (290a) is switched OFF and/ or in case the kill switch (290b) is switched ON.

8. The two-wheel vehicle (100)as claimed in claim 1, wherein the first controller (210) being further configured to: monitor status of each of the first set of sensors (260); and output a signal (264) indicating failure of any of the first set of sensors (260) to the second controller (220) whereby, upon detection of the failure, the second controller (220) controls operation of the ISG (250) independent of inputs received from the first set of sensors (260).

9. The two-wheel vehicle (100) as claimed in claim 2, wherein the first set of actuators (242) comprises a fuel pump (230a) and an injector (230b) of the fuel injection system (230).

10. The two-wheel vehicle (100)as claimed in claim 2, wherein the first set of actuators (242) comprises an ignition coil (240a) of the ignition system (240).

11. The two-wheel vehicle (100) as claimed in claim 3, wherein the second set of switches (280) comprises at least one of electric start switch (280a), a brake switch (280b), an ignition key (280c), a headlamp switch (280d), and an idle start-stop switch (280e).

12. The two-wheel vehicle (100)as claimed in claim 1, wherein the second controller (220) being further configured to: receive inputs from a second set of sensors, the second set of sensors comprises at least one of a speed sensor to detect speed of a rotor of the ISG (250) and a position sensor to detect position of the rotor of the ISG (250); and output a control signal to the ISG (250) thereby dynamically controlling operation of the ISG (250).

13. The two-wheel vehicle (100) as claimed in claim 1, wherein the first controller (210) and the second controller (220) communicate with each other through the control bus (262) using a CAN protocol.

14. The two-wheel vehicle (100) as claimed in claim 1, wherein the first controller (210) and the second controller (220) communicate with each other through the control bus (262) using a K-line protocol.

15. The two-wheel vehicle (100) as claimed in claim 1, wherein the second controller (220) comprises an Electronic Control Unit (ECU) of a hybrid vehicle and configured to: communicate with the first controller (210).

16. The two-wheel vehicle (100) as claimed in claim 1, wherein the first controller (210) being further configured to communicate with an instrument cluster of the vehicle (100).

17. The two-wheel vehicle (100) as claimed in claim 1, wherein the first controller (210) being further configured to communicate with a telematics unit of the vehicle (100) or an Inertial Measurement Unit (IMU) of the vehicle (100) or a Bay Control Unit (BCU) of the vehicle (100) or a Hydraulic and Electronic Control Unit (HECU) of the vehicle (100).

## Patentansprüche

1. Zweiradfahrzeug (100) mit einem Motor-Verwaltungssystem (200), wobei das Motor-Verwaltungssystem (200) aufweist:
eine erste Steuereinrichtung (210), wobei die erste Steuereinrichtung (210) mit einem Kraftstoffeinspritzsystem (230) und einem Zündsystem (240) eines Verbrennungsmotors betriebsmäßig verbunden ist;
eine zweite Steuereinrichtung (220), wobei die zweite Steuereinrichtung (220) mit einem integrierten Startergenerator (ISG) (250) betriebsmäßig gekoppelt ist; und
einen Steuerbus (262), wobei der Steuerbus (262) fähig ist, die erste Steuereinrichtung (210) und die zweite Steuereinrichtung (220) miteinander zu verbinden;
wobei eine erste Menge von Sensoren (260) einen Überschlagsensor (260e) zum Messen der Winkelposition des Zweiradfahrzeugs (100) und/oder einen Seitenständersensor (260f) zum Erkennen des Zustands eines Seitenständers (190) des Zweiradfahrzeugs (100) aufweist;
wobei die erste Steuereinrichtung (210) ferner eingerichtet ist zum: Ausgeben eines Zündsperrsignals an das Zündsystem (240) und eines Einspritzungssperrsignals an das Kraftstoffeinspritzsystem (230) im Falle, dass sich das Fahrzeug (100) in einem Überschlagzustand befindet, und/oder im Falle, dass der Seitenständer (190) in einem ausgefahrenen Zustand ist;
wobei die erste Steuereinrichtung (210) ferner eingerichtet ist zum: Übermitteln von Eingangswerten, die von dem Überschlagsensor (260e) und dem Seitenständersensor (260f) her empfangen worden sind, an die zweite Steuereinrichtung (220),
wobei die zweite Steuereinrichtung (220) ferner eingerichtet ist zum: Ausgeben eines Anlassersperrsignals an den ISG (250) im Falle, dass sich das Fahrzeug (100) in einem Überschlagzustand befindet, und/oder im Falle, dass der Seitenständer (190) in einem ausgefahrenen Zustand ist; und wobei die zweite Steuereinrichtung (220) von der ersten Steuereinrichtung (210) entfernt angeordnet ist.

2. Zweiradfahrzeug (100) nach Anspruch 1, wobei die erste Steuereinrichtung (210) eingerichtet ist zum: Empfangen von Eingangswerten von der an dem Fahrzeug (100) angebrachten ersten Menge von Sensoren (260) her; Vergleichen der Eingangswerte mit vorgegebenen Bedingungen und Erzeugen eines Vergleichsergebnis für jeden Eingangswert; und aufgrund des Vergleichsergebnisses Ausgeben von Steuersignalen an eine erste Menge von Aktoren (242) des Kraftstoffeinspritzsystems (240).

3. Zweiradfahrzeug (100) nach Anspruch 1, wobei die zweite Steuereinrichtung (220) eingerichtet ist zum: Empfangen von Eingangswerten von der ersten Steuereinrichtung (210) und einer an dem Fahrzeug (100) angebrachten zweiten Menge von Schaltern (280) her; Vergleichen der Eingangswerte mit vorgegebenen Bedingungen und Erzeugen eines Vergleichsergebnisses für jeden Eingangswert; und aufgrund des Vergleichsergebnisses Ausgeben eines Steuersignals an den ISG (250).

4. Zweiradfahrzeug (100) nach Anspruch 1, wobei die erste Menge von Sensoren (260) zumindest einen Kurbelwellensensor (260a), einen Drosselklappensensor (260b), einen Motortemperatursensor (260c) und einen Fahrzeuggeschwindigkeitssensor (260d) umfasst.

5. Zweiradfahrzeug (100) nach Anspruch 4, wobei die erste Steuereinrichtung (210) ferner eingerichtet ist zum: Übermitteln der von der ersten Menge von Sensoren (260) her empfangenen Eingangswerte an die zweite Steuereinrichtung (220), wobei die zweite Steuereinrichtung (220) ferner eingerichtet ist zum: Vergleichen der Eingangswerte mit vorgegebenen Bedingungen vergleicht und Erzeugen eines Vergleichsergebnisses für jeden Eingangswert von den Sensoren (260a, 260b, 260c, 260d) der ersten Menge von Sensoren (260); und aufgrund des Vergleichsergebnisses Ausgeben eines Leerlauf-Stopp-Signals an die ISG (250) und des Zündsperrsignals an die erste Steuereinrichtung (210).

6. Zweiradfahrzeug (100) nach Anspruch 1, wobei die erste Steuereinrichtung (210) ferner eingerichtet ist zum: Empfangen von Eingangswerten von einer ersten Menge von Schaltern (290) her, wobei die erste Menge von Schaltern (290) zumindest einen Zündschlüssel (290a) und/oder einen Not-Aus-Schalter (290b) umfasst; und Ausgeben eines Zündsperrsignals an das Zündsystem (240) und eines Einspritzungssperrsignals an das Kraftstoffeinspritzsystem (240) im Falle, dass der Zündschlüssel (290a) ausgeschaltet ist, und/oder im Falle, dass der Not-Aus-Schalter (290b) eingeschaltet ist.

7. Zweiradfahrzeug (100) nach Anspruch 6, wobei die erste Steuereinrichtung (210) ferner eingerichtet ist zum: Übermitteln von Eingangswerten (290a', 290b'), die von dem Zündschlüssel (290a) und dem Not-Aus-Schalter (290b) her empfangen worden sind, an die zweite Steuereinrichtung (220), wobei die zweite Steuereinrichtung (220) ferner eingerichtet ist zum: Ausgeben eines Anlassersperrsignals an den ISG (250) im Falle, dass der Zündschlüssel (290a) ausgeschaltet ist, und/oder im Falle, dass der Not-Aus-Schalter (290b) eingeschaltet ist.

8. Zweiradfahrzeug (100) nach Anspruch 1, wobei die erste Steuereinrichtung (210) ferner eingerichtet ist zum: Überwachen des Status jedes Sensors der ersten Menge von Sensoren (260); und Ausgeben eines Signals (264), das einen Ausfall eines der Sensoren der ersten Menge von Sensoren (260) anzeigt, an die zweite Steuerung (220), woraufhin die zweite Steuerung (220) bei Erkennung des Ausfalls den Betrieb des ISG (250) unabhängig von den von der ersten Menge von Sensor (260) empfangenen Eingangswerten steuert.

9. Zweiradfahrzeug (100) nach Anspruch 2, wobei die erste Menge von Aktoren (242) eine Kraftstoffpumpe (230a) und eine Einspritzdüse (230b) des Kraftstoffeinspritzsystems (230) umfasst.

10. Zweiradfahrzeug (100) nach Anspruch 2, wobei die erste Menge von Aktoren (242) eine Zündspule (240a) des Zündsystems (240) umfasst.

11. Zweiradfahrzeug (100) nach Anspruch 3, wobei die zweite Menge von Schaltern (280) zumindest umfasst: einen Elektrostartschalter (280a), einen Bremsschalter (280b), einen Zündschlüssel (280c), einen Scheinwerferschalter (280d) und einen Leerlauf-Start-Stopp-Schalter (280e).

12. Zweiradfahrzeug (100) nach Anspruch 1, wobei die zweite Steuereinrichtung (220) ferner eingerichtet ist zum: Empfangen von Eingangswerten von einer zweiten Menge von Sensoren her, wobei die zweite Menge von Sensoren einen Geschwindigkeitssensor zum Erkennen der Geschwindigkeit eines Rotors des ISG (250) und/oder einen Positionssensor zum Erkennen der Position des Rotors des ISG (250) umfasst; und Ausgeben eines Steuersignals an den ISG (250), wodurch der Betrieb des ISG (250) dynamisch gesteuert wird.

13. Zweiradfahrzeug (100) nach Anspruch 1, wobei die erste Steuereinrichtung (210) und die zweite Steuereinrichtung (220) miteinander über den Steuerbus (262) mittels eines CAN-Protokolls kommunizieren.

14. Zweiradfahrzeug (100) nach Anspruch 1, wobei die erste Steuereinrichtung (210) und die zweite Steuereinrichtung (220) miteinander über den Steuerbus (262) mittels eines K-Line-Protokolls kommunizieren.

15. Zweiradfahrzeug (100) nach Anspruch 1, wobei die zweite Steuereinrichtung (220) eine elektronische Steuereinrichtung (ECU) eines Hybridfahrzeugs aufweist und eingerichtet ist zum: Kommunizieren mit der ersten Steuereinrichtung (210).

16. Zweiradfahrzeug (100) nach Anspruch 1, wobei die erste Steuereinrichtung (210) ferner dazu eingerichtet ist, mit einem Kombiinstrument des Fahrzeugs (100) zu kommunizieren.

17. Zweiradfahrzeug (100) nach Anspruch 1, wobei die erste Steuereinrichtung (210) ferner eingerichtet ist zum: Kommunizieren mit einer Telematik-Einheit des Fahrzeugs (100) oder einer Trägheitsmesseinheit (IMU) des Fahrzeugs (100) oder einer Bay-Steuereinrichtung (BCU) des Fahrzeugs (100) oder einer hydraulischen und elektronischen Steuereinrichtung (HECU) des Fahrzeugs (100).

## Revendications

1. Véhicule à deux roues (100) comportant un système de gestion du moteur (200), le système de gestion du moteur (200) comprenant :
un premier contrôleur (210), le premier contrôleur (210) étant couplé de manière opérationnelle à un système d'injection de carburant (230) et à un système d'allumage (240) d'un moteur à combustion interne ;
un deuxième contrôleur (220), le deuxième contrôleur (220) étant couplé de manière opérationnelle à un générateur-démarreur intégré (GDI) (250) ; et
un bus de commande (262), le bus de commande (262) étant capable d'interconnecter le premier contrôleur (210) et le deuxième contrôleur (220) ;
un premier ensemble de capteurs (260) comportant au moins l'un parmi un capteur de renversement (260e) pour mesurer la position angulaire du véhicule à deux roues (100) et un capteur de béquille latérale (260f) pour détecter l'état d'une béquille latérale (190) du véhicule à deux roues (100) ;
le premier contrôleur (210) étant en outre configuré pour : émettre un signal de désactivation de l'allumage vers le système d'allumage (240) et un signal de désactivation de l'injection vers le système d'injection de carburant (230) dans le cas où le véhicule (100) se trouve dans un état de renversement et/ou dans le cas où la béquille latérale (190) est déployée ;
le premier contrôleur (210) étant en outre configuré pour : communiquer les entrées reçues du capteur de renversement (260e) et du capteur de béquille latérale (260f) au deuxième contrôleur (220), le deuxième contrôleur (220) étant en outre configuré pour : émettre un signal de désactivation du démarrage vers le GDI (250) dans le cas où le véhicule (100) se trouve dans un état de renversement et/ou dans le cas où la béquille latérale (190) est déployée ; et
le deuxième contrôleur (220) étant situé à distance du premier contrôleur (210).

2. Véhicule à deux roues (100) selon la revendication 1, dans lequel le premier contrôleur (210) est configuré pour : recevoir des entrées provenant du premier ensemble de capteurs (260) montés sur le véhicule (100) ; comparer les entrées à des conditions prédéterminées et générer un résultat de comparaison pour chacune des entrées ; et émettre des signaux de commande vers un premier ensemble d'actionneurs (242) du système d'injection de carburant (240) sur la base du résultat de comparaison.

3. Véhicule à deux roues (100) selon la revendication 1, dans lequel le deuxième contrôleur (220) est configuré pour : recevoir des entrées provenant du premier contrôleur (210) et d'un deuxième ensemble de commutateurs (280) montés sur le véhicule (100) ; comparer les entrées à des conditions prédéterminées et générer un résultat de comparaison pour chacune des entrées ; et émettre un signal de commande vers le GDI (250) sur la base du résultat de la comparaison.

4. Véhicule à deux roues (100) selon la revendication 1, dans lequel le premier ensemble de capteurs (260) comprend au moins l'un parmi un capteur de position de vilebrequin (260a), un capteur de position de papillon (260b), un capteur de température du moteur (260c) et un capteur de vitesse du véhicule (260d).

5. Véhicule à deux roues (100) selon la revendication 4, dans lequel le premier contrôleur (210) est en outre configuré pour : communiquer les entrées reçues du premier ensemble de capteurs (260) au deuxième contrôleur (220), le deuxième contrôleur (220) étant en outre configuré pour : comparer les entrées à des conditions prédéterminées et générer un résultat de comparaison pour chacune des entrées provenant des capteurs (260a, 260b, 260c, 260d) du premier ensemble de capteurs (260) ; et émettre un signal d'arrêt au ralenti vers le GDI (250) et le signal de désactivation de l'allumage vers le premier contrôleur (210) sur la base du résultat de la comparaison.

6. Véhicule à deux roues (100) selon la revendication 1, dans lequel le premier contrôleur (210) est en outre configuré pour : recevoir des entrées provenant d'un premier ensemble de commutateurs (290), le premier ensemble de commutateurs (290) comprenant au moins l'une parmi une clé de contact (290a) et un coupe-circuit (290b) ; et émettre un signal de désactivation de l'allumage vers le système d'allumage (240) et un signal de désactivation de l'injection vers le système d'injection de carburant (240) dans le cas où la clé de contact (290a) est en position OFF et/ou dans le cas où le coupe-circuit (290b) est en position ON.

7. Véhicule à deux roues (100) selon la revendication 6, dans lequel le premier contrôleur (210) est en outre configuré pour : communiquer les entrées (290a', 290b') reçues de la clé de contact (290a) et du coupe-circuit (290b) au deuxième contrôleur (220), le deuxième contrôleur (220) étant en outre configuré pour : émettre un signal de désactivation du démarrage vers le GDI (250) dans le cas où la clé de contact (290a) est en position OFF et/ou dans le cas où le coupe-circuit (290b) est activé.

8. Véhicule à deux roues (100) selon la revendication 1, dans lequel le premier contrôleur (210) est en outre configuré pour : surveiller l'état de chacun des capteurs du premier ensemble de capteurs (260) ; et d'émettre un signal (264) indiquant la défaillance de l'un quelconque du premier ensemble de capteurs (260) vers le deuxième contrôleur (220), grâce auquel, lors de la détection de la défaillance, le deuxième contrôleur (220) commande le fonctionnement du GDI (250) indépendamment des entrées reçues du premier ensemble de capteurs (260).

9. Véhicule à deux roues (100) selon la revendication 2, dans lequel le premier ensemble d'actionneurs (242) comprend une pompe à carburant (230a) et un injecteur (230b) du système d'injection de carburant (230).

10. Véhicule à deux roues (100) selon la revendication 2, dans lequel le premier ensemble d'actionneurs (242) comprend une bobine d'allumage (240a) du système d'allumage (240).

11. Véhicule à deux roues (100) selon la revendication 3, dans lequel le deuxième ensemble de commutateurs (280) comprend au moins l'un parmi un commutateur de démarrage électrique (280a), un commutateur de frein (280b), une clé de contact (280c), un commutateur de phares (280d) et un commutateur de démarrage-arrêt au ralenti (280e).

12. Véhicule à deux roues (100) selon la revendication 1, dans lequel le deuxième contrôleur (220) est en outre configuré pour : recevoir des entrées provenant d'un deuxième ensemble de capteurs, le deuxième ensemble de capteurs comprenant au moins l'un parmi un capteur de vitesse pour détecter la vitesse d'un rotor du GDI (250) et un capteur de position pour détecter la position du rotor du GDI (250) ; et émettre un signal de commande vers le GDI (250), contrôlant ainsi de manière dynamique le fonctionnement du GDI (250).

13. Véhicule à deux roues (100) selon la revendication 1, dans lequel le premier contrôleur (210) et le deuxième contrôleur (220) communiquent entre eux via le bus de commande (262) en utilisant un protocole CAN.

14. Véhicule à deux roues (100) selon la revendication 1, dans lequel le premier contrôleur (210) et le deuxième contrôleur (220) communiquent entre eux via le bus de commande (262) en utilisant un protocole K-line.

15. Véhicule à deux roues (100) selon la revendication 1, dans lequel le deuxième contrôleur (220) comprend une unité de commande électronique (ECU) d'un véhicule hybride et est configuré pour : communiquer avec le premier contrôleur (210).

16. Véhicule à deux roues (100) selon la revendication 1, dans lequel le premier contrôleur (210) est en outre configuré pour communiquer avec un tableau de bord du véhicule (100).

17. Véhicule à deux roues (100) selon la revendication 1, dans lequel le premier contrôleur (210) étant en outre configuré pour communiquer avec une unité télématique du véhicule (100) ou une unité de mesure inertielle (IMU) du véhicule (100) ou une unité de commande de la plate-forme (BCU) du véhicule (100) ou une unité de commande hydraulique et électronique (HECU) du véhicule (100).
